# EUROPÄISCHE PATENTSCHRIFT

(11) **EP 1 309 664 B1**
(45) Veröffentlichungstag und Bekanntmachung des Hinweises auf die Patenterteilung: **07.04.2004**
(21) Anmeldenummer: 01958029.9
(22) Anmeldetag: 27.07.2001
(51) Int. Cl.: C09J 7/02, C09J 107/02

(54) **KLEBEBAND FÜR VERPACKUNGSZWECKE**
ADHESIVE TAPE FOR WRAPPING PURPOSES
BANDE ADHESIVE POUR EMBALLAGE

(30) Priorität: 27.07.2000 DE 10036707
(43) Veröffentlichungstag der Anmeldung: 14.05.2003
(73) Patentinhaber: Tesa AG, 20253 Hamburg (DE)
(72) Erfinder: GALLE, André, 22767 Hamburg (DE); MÜSSIG, Bernhard, 21218 Seevetal (DE); RÖBER, Stefan, 22453 Hamburg (DE); SINNEN, Herbert, 25421 Pinneberg (DE); WENNINGER, Dieter, 22765 Hamburg (DE)
(86) Internationale Anmeldenummer: PCT/EP2001/008740
(87) Internationale Veröffentlichungsnummer: WO 2002/010300

(56) Entgegenhaltungen:
- EP-A- 0 960 923
- DATABASE WPI Section Ch, Week 199950 Derwent Publications Ltd., London, GB; Class A18, AN 1999-586172 XP002181908 & JP 11 256122 A (YAZAKI CORP), 21. September 1999 (1999-09-21)
- DATABASE WPI Section Ch, Week 199850 Derwent Publications Ltd., London, GB; Class A97, AN 1998-589925 XP002181909 & JP 10 265746 A (TOYO CHEM CORP), 6. Oktober 1998 (1998-10-06)

## Beschreibung

Die Erfindung bezieht sich auf ein Klebeband mit einem Träger auf Basis von Polyvinylchlorid, der einseitig mit einer lösemittelfreien, Aromaten modifizierten Klebemasse auf Basis von Naturkautschuklatex beschichtet ist, die Verwendung des Klebebands als Verpackungsklebeband sowie die Verwendung eines Klebebands mit einem Träger auf Basis von Polyvinylchlorid, der einseitig mit einer lösemittelfreien Klebemasse auf Basis von Naturkautschuklatex beschichtet ist, ebenfalls als Verpackungsklebeband.

Klebebänder mit Folien auf Basis von Polyvinylchlorid (PVC) und mit Klebemassen auf Basis von lösemittelhaltigem Naturkautschuk sind bekannt und werden von bekannten Herstellern angeboten.

Eine Beschreibung derartiger Klebebänder befindet sich beispielsweise in "Packaging Tapes", Stefan Röber in Handbook of Pressure Sensitive Adhesive Technology, Third Edition, edited by Donatas Satas, Satas&Associates, Warwick, Rhode Island pp. 787-814. Weitere Beschreibungen befinden sich in "European Adhesives & Sealants 10(4), 1993, 29 von G. Pedala" und "European Adhesives & Sealants 2(2), 1985, 18 von R.W. Andrew".

Auf Grund der bekannten Nachteile bei der Herstellung von lösemittelhaltigen Klebebändem, wie zum Beispiel das aufwendige Recycling von Lösungsmitteln, die Emission von Lösungsmittel in die Umwelt, die Gefährdung am Arbeitsplatz durch leicht entflammbare Lösungsmittel und die Beschränkung der Beschichtungsgeschwindigkeit durch Trocknung der Klebemasse, sind lösemittelfreie Technologien zur Herstellung von Klebebändem von fortschreitender Bedeutung.

Nachteilig ist neben der bereits beschriebenen Problematik der Lösemitteltechnologie der erforderliche Abbau des Naturkautschuks bei der Herstellung der Klebemasse, die Mastikation. Hieraus resultiert eine deutlich nachlassende Kohäsivität der Klebemasse je nach Stärke des Abbau durch mechanische Belastung.

Der zielgerichtet durchgeführte technische Prozeß des Kautschukabbaus unter der kombinierten Einwirkung von Scherspannung, Temperatur, Luftsauerstoff wird in der Fachliteratur als Mastikation (engl.: mastication) bezeichnet und zumeist im Beisein chemischer Hilfsmittel durchgeführt, welche aus der Fachliteratur als Mastiziermittel oder Peptizer, seltener auch als "chemische Plastiziermittel" bekannt sind.
Der Mastikationsschritt ist in der Kautschuktechnologie nötig, um eine Erleichterung der Aufnahme der Zusatzstoffe zu erzielen.

Nach Römpp (Römpp Lexikon Chemie - Version 1.5, Stuttgart/New York: Georg Thieme Verlag 1998) stellt die Mastikation eine gummitechnologische Bezeichnung für den Abbau langkettiger Kautschuk-Moleküle zur Erhöhung der Plastizität beziehungsweise Reduzierung der (Mooney-)Viskosität von Kautschuken dar. Die Mastikation wird durchgeführt durch Behandlung insbesondere von Naturkautschuk in Knetem oder zwischen Walzen bei möglichst niedrigen Temperaturen in Gegenwart von Mastikationshilfsmitteln (Mastizierhilfsmittel). Die dabei einwirkenden hohen mechanischen Kräfte führen zu einem "Zerreißen" der Kautschuk-Moleküle unter Bildung von Makroradikalen, deren Rekombination durch Reaktion mit Luftsauerstoff verhindert wird. Mastikationshilfsmittel wie aromatische oder heterocyclische Mercaptane beziehungsweise deren Zink-Salze oder Disulfide beschleunigen durch Begünstigung der Bildung von Primärradikalen den Mastikationsprozeß. Aktivatoren wie Metall- (Eisen-, Kupfer-, Cobalt-) Salze von Tetraazaporphyrinen oder Phthalocyaninen ermöglichen eine Erniedrigung der Mastikationstemperatur. Mastikationshilfsmittel werden bei der Mastikation von Naturkautschuk in Mengen von ca. 0,1 bis 0,5 Gew.-% in Form von Masterbatches eingesetzt, die eine gleichmäßige Verteilung dieser geringen Chemikalienmenge in der Kautschukmasse erleichtern.

Die Mastikation ist streng zu unterscheiden von dem sich bei allen üblichen lösungsmittelfreien Polymertechnologien wie Compoundieren, Fördern und Beschichten in der Schmelze ergebenden Abbau, der Degradation (engl.: degradation).

Die Degradation ist eine Kollektivbezeichnung für unterschiedliche Prozesse, die das Aussehen und die Eigenschaften von Kunststoffen verändem. Degradation kann zum Beispiel durch chemische, thermische, oxidative, mechanische oder biologische Einflüsse oder auch durch Strahleneinwirkung (wie (UV-)Licht) verursacht werden. Folge sind zum Beispiel Oxidation, Kettenspaltungen, Depolymerisation, Vernetzung beziehungsweise Abspaltung von Seitengruppen der Polymeren. Die Stabilität von Polymeren gegenüber einer Degradation kann durch Additive, zum Beispiel durch Zusatz von Stabilisatoren wie Antioxidantien oder Photostabilisatoren erhöht werden.

Die Verwendung derartiger Klebemassen auf Basis von Naturkautschuk-Schmelzhaftklebem für Klebebänder, insbesondere Verpackungsklebebänder, zum Verschließen von Kartons aus recyceltem Papier oder Kartonagen, führt dazu, daß sich die Kartons frühzeitig öffnen. Bei ausreichender großer Deckelspannung des Kartons, verursacht durch den Fülldruck des verpackten Materials im Karton oder durch die dem Verschließen entgegenwirkende Spannung des Verpackungsmaterials, löst sich das Klebeband von der Kartonoberfläche und der Karton öffnet sich durch Abrutschen des Verpackungsklebebandes.

Die Kohäsion und damit die Verpackungssicherheit von Klebebändem mit einer Klebemasse auf Basis von Naturkautschuk kann entweder durch Vernetzung der Kautschuk-Klebemasse und/oder durch eine Herstellungsvariante der Klebemasse, bei der der eingesetzte Naturkautschuk deutlich weniger stark abgebaut wird und somit ein höheres Molekulargewicht aufweist, verbessert werden. Hierdurch kann einem Abrutschen der Klebebänder auf der Kartonoberfläche, wie oben beschrieben, entgegengewirkt werden.

Klebebänder mit einem Träger auf Basis von PVC in Kombination mit einer Klebemasse auf Basis von Acrylatdispersionen sind auf Grund der hohen Polarität der Klebemasse und den dadurch resultierenden extrem hohen Abrollkräften nicht möglich.

Lösemittelfreie Technologien zur Herstellung von Klebebändern, insbesondere Verpackungsklebebändern, ist bisher auf die Verwendung von Klebemasse auf Basis von Acrylatdispersionen sowie auf die Verwendung von schmelzenden, thermoplastischen Elastomeren beschränkt.
Vorteil dieser thermoplastischen Elastomeren, vorwiegend Blockcopolymere mit Polystyrolblöcken, ist der relativ niedrige Erweichungspunkt und die damit verbundene Vereinfachung des Auftrags- beziehungsweise Streichprozesses sowie die Vermeidung der oben beschriebenen Nachteile der lösemittel-basierenden Technologien. Das ungünstige Alterungsverhalten und das Eigenschaftsprofil derartiger Verpackungsbänder bei erhöhten Temperaturen, die schlechte Wärmestandfestigkeit, führen zu einem frühzeitigen Öffnen der mit diesen Verpackungsbändem verpackten Kartons beziehungsweise zu einem allgemein teilweise ungünstigen Leistungsprofil für Verpackungsklebebänder. Weiterhin sind die zum Teil sehr hohen Prozeßtemperaturen nachteilig für bestimmter Klebemassenzusammensetzungen.

Weitere lösemittelfreie Systeme auf Basis wäßriger Klebestoffe, wie beispielsweise Klebesysteme auf Basis von Polyvinylacetat, Polyvinylacetat-Ethylen-Copolymere, Neopren, Styrol-Butadien, Polyurethan, Polyvinylalkohol, finden aufgrund einer für Klebebänder, insbesondere Verpackungsklebebänder, ungünstigen Kosten und/oder Leistungsstruktur keine oder nur geringfügige Anwendung. Eine Übersicht über die wichtigsten wäßrigen Klebstoffsysteme sowie ihre Verwendung findet sich in "Solvent free adhesives", T.E. Rolando (H. B. Fuller) in Rapra Rev. Rep. 1997, 9(5), 3-30 Rapra Technology Ltd.

Verschiedene Wege zur lösungsmittelfreien Herstellung und Verarbeitung von Kautschuk-Haftklebem sind bekannt
Eine Übersicht über solche Klebemassen und deren Einsatz im Bereich der Pressure Sensitive Adhesives findet sich in "Natural Rubber Adhesives" (G. L. Butler in Handbook of Pressure Sensitive Adhesive Technology, Third Edition, edited by Donata Satas, Van Nostrand Reinhold New York, pp.261-287).

Alle bekannten Verfahren zeichnen sich durch extrem starken Kautschukabbau aus. Dieser erfordert bei der Weiterverarbeitung der Massen zu Selbstklebebändem extreme Vernetzungsbedingungen und hat außerdem ein teilweise eingeschränktes Anwendungsprofil, insbesondere für den Einsatz resultierender Selbstklebebänder bei höheren Temperaturen, zur Folge.

Läsemittelfreie Schmelzhaftkleber auf Basis von nicht-thermoplastischen Elastomeren, wie zum Beispiel Naturkautschuk oder anderer hochmolekularer Kautschuke, weisen ohne Vemetzungsschritt der Klebemasse eine für die meisten Anwendungen ungenügende Kohäsion auf und kommen somit nicht für den Einsatz im Rahmen eines Verpackungsklebebandes in Frage. Ursache für dieses Versagen von unvemetzten Klebemassen auf Basis Naturkautschuk ist die relativ starke Reduzierung des Molekulargewichts durch die Verarbeitung beziehungsweise durch den Herstellungsprozess der Klebemassen auf Basis von Naturkautschuk und die hierbei resultierende, verminderte beziehungsweise ungenügende Kohäsion der Klebemassen.

In CA 698 518 wird ein Prozeß beschrieben, wie eine Masseherstellung durch Zusatz hoher Weichmacheranteile und/oder gleichzeitig starker Mastikation des Kautschuks zu erreichen ist Zwar lassen sich nach diesem Verfahren Haftkleber mit extrem hoher Anfaßklebkraft erzielen, durch den relativ hohen Weichmacheranteil oder auch den starken Abbau der Molekularstruktur des Elastomers auf ein Molekulargewichtsmittel von M_{w} ≤ 1 Million ist die anwendergerechte Scherfestigkeit auch mit anschließender höherer Vernetzung nur eingeschränkt zu erreichen.

Die Verwendung von Polymerblends, wo neben nicht-thermoplastischem Naturkautschuk auch Blockcopolymere im Verhältnis von ca. 1:1 eingesetzt werden, stellt im wesentlichen eine unbefriedigende Kompromißlösung dar, da sich weder hohe Scherfestigkeiten beim Einsatz der Selbstklebebänder bei höheren Temperaturen, noch deutliche Verbesserungen gegenüber den in CA 698 518 beschriebenen Eigenschaften ergeben.

Roh-Naturkautschuklatex wird von den Plantagen geliefert und mittels entsprechender Methoden gereinigt, konserviert und aufkonzentriert. Allgemein beschrieben werden die Latextypen und Methoden der Verarbeitung in "Naturkautschuk - Technisches Informationsblatt", Malaysian Rubber Producers Research Association, L1, 1977 und in "Kautschuktechnologie", Wemer Hofmann, Gentner Verlag Stuttgart S. 51ff.

Naturkautschuklatex wird als Naturprodukt von sogenannten Latexbäumen geerntet. Nach diversen Aufbereitungsschritten zur Auftrennung und Reinigung werden vier Grundtypen von Naturkautschuklatices unterschieden:
1. Standard Naturkautschuklatex mit einem hohen Ammoniakgehalt von 0,7 Gew.-%
2. Naturkautschuklatex mit niedrigem Ammoniakgehalt von 0,2 Gew.-% in Kombination mit Zinkoxid und Tetramethyl-thiuram-dissulphid < 0,035 Gew.-%
3. Naturkautschuklatex doppelt zentifugiert mit besonders hoher Reinheit
4. Naturkautschuklatex teilweise vulkanisiertfür speziellen Anwendungen

Eine Mastikation und der damit verbundene Abbau des Naturkautschuks ist bei der Herstellung von Klebemassen auf Basis von Naturkautschuklatex nicht notwendig, da im Falle der lösemittelfreien, wäßrigen Klebemasse durch einfaches Vermischen der Komponenten eine Mastikation und damit ein Molekülabbau durch mechanische Belastung nicht stattfindet. Hieraus resultiert eine enge Verschlaufung der Naturkautschuk-Latex/Isoprenmoleküle, ein hohes Molekulargewicht bedingt durch fehlende Mastikation, eine breite Molekulargewichtsverteilung und ein niedriger Erweichungspunkt T_{g}.
Diese Faktoren bedingen eine sehr gute Balance zwischen Kohäsion und Adhäsion der aus Harzabmischungen resultierenden Klebemasse, und weiterhin ein für Klebebänder äußerst leistungsstarkes Eigenschaftsprofil über einen sehr breiten Temperaturbereich.

Dieses positive Verhalten über einen breiten Temperaturbereich wird ausgenutzt bei dem in JP 56 030 481 beschriebenen Klebeband mit einer Klebemasse auf Basis von Naturkautschuklatex. Durch Verwendung des Naturkautschuklatex wird ein staßunempfindliches Verhalten bei niedrigen Temperaturen beschrieben.

Ein weiterer Punkt ist, daß Naturkautschuklatex sich durch ein besonders breites Spektrum an Anwendungen auszeichnet. So ist Naturkautschuklatex einerseits für den Einsatz als Klebemasse für Verpackungsmaterialien geeignet und zum anderen für Anwendungen außerhalb der Klebetechnologie.

Nachteilig an Klebemassensystemen auf Basis von Naturkautschuklatex ist die mangelnde Stabilität des Rohstoffes Naturkautschuklatex gegenüber mechanischer Belastung und der damit verbundenen Koagulation des Naturkautschuklatex in der Klebemasse. Diese Scherempfindlichkeit bedingt die eingeschränkte Handhabbarkeit und Einsetzbarkeit des Naturkautschuklatex für die Klebemassentechnologie und Klebebandindustrie. Die Herstellung von Klebebändern, bei der die Naturkautschuklatex enthaltende Klebemasse mit hoher Geschwindigkeit auf eine Folie beschichtet werden kann, ist nicht bekannt.

Durch den Einsatz von stabilisierenden Harzdispersionen und/oder oberflächenaktiven Substanzen, wie zum Beispiel Emulgatoren, kann die Stabilität des Naturkautschuklatex deutlich gesteigert werden. Mit der Steigerung der Stabilität des Naturkautschuklatex durch oberflächenaktive Stoffe in hohen Konzentrationen ist aber gleichzeitig ein drastischer Verlust der Kohäsion der Klebemasse gekoppelt, so daß derartig modifizierte Klebemassen nicht für Verpackungsklebebänder eingesetzt werden können.

Die allgemeine Verwendung von Naturkautschuklatex für Klebemassen sowie den Latex stabilisierende Harzdispersionen ist beschrieben in "Tackified waterborne adhesive for PSA tapes", J. G. de Hullu, European Adhesive & Sealants, 12 (1998), pp 11-12. Durch den Einsatz derartiger den Naturkautschuklatex stabilisierender Harzdispersionen wird eine Verarbeitung beziehungsweise Beschichtung von Klebemassen auf Basis von Naturkautschuklatex ermöglicht. Durch das störungsfreie Aufbringen der Dispersionsklebemassen auf einen polymeren Träger ist eine technisch machbare und ökonomisch sinnvolle Klebeband-Produktion möglich. Durch den Einsatz einer geeigneten Zusammensetzung der Klebemasse und technischer Einstellung und Optimierung der Beschichtungsanlagen ist ein Einsatz dieser Technologie ermöglicht.

Die Anwendung und die Entwicklung eines Klebebandes, welches leise abrollt und für Verpackungsanwendungen geeignet ist, ist hierbei nicht beschrieben. Die Verwendung von leise abrollenden Klebebändern, insbesondere zum Kartonverschluß ist jedoch von großer Bedeutung innerhalb der Verpackungsindustrie, um die Lärmbelastung in den Verpackungshallen zu erniedrigen und somit die Arbeitsleistung zu erhöhen. Die Fähigkeit des leisen Abrollens ist von fundamentaler Bedeutung, um ein Verpackungsklebeband im mittleren bis oberen Preis-Leistungssegment einzuordnen.

Allgemein ist Naturkautschuklatex als Komponente für Klebemassen bekannt und unter anderem in Patenten beschrieben. Die Einsatzgebiete derartiger Klebemassen auf Basis von Naturkautschuklatex sind Anwendungen im Bereich der Etiketten und Pflastertechnologie.

Nicht ist jedoch die Aufbringung der Klebemasse auf einen durchgehenden Träger auf Basis von PVC offenbart. Beide Eigenschaften sind bei der Verwendung von Klebemassen auf Basis von Naturkautschuklatex essentiell.

Die Herstellung von wäßrigen Klebemassen auf Basis von Naturkautschuklatex ist bekannt. Diese Klebemassen werden wie oben beschrieben zur Herstellung von selbstklebenden Etiketten verwendet. Hierbei werden die üblichen Methoden zur Herstellung von Dispersionsklebestoffen verwendet.

Ebenfalls ist die Herstellung von Klebemassensystemen, welche Naturkautschuklatex enthalten, in Patent EP 0 960 923 A1 beschrieben. Hierbei wird zum einen die Herstellung von Dispersionsklebemassen offenbart als auch die Einbringung von Naturkautschuklatex in andere Naturkautschukklebesysteme mittels Kneter, Mischer oder Extruder. Diese derart hergestellten Klebemassen können auf Folie oder Vlies beschichtet werden.
Eine Verbesserung der Verpackungseigenschaften derartiger Klebebänder mittels einer kontrollierten, nachhaltigen Vernetzung der Klebemasse, die zudem im Rahmen eines sinnvollen Produktionsprozesses eingesetzt werden kann, ist nicht beschrieben.

Bei Verwendung von Klebemassenvariationen auf Basis von Naturkautschuklatex ist - wie bereits oben ausgeführt - eine nachhaltige Vernetzung nicht notwendig, um ein gutes den meisten anderen Klebemassensystemen überlegenes Verpackungsverhalten zu erzielen.

Durch den Einsatz der zuvor beschriebenen stabilisierenden Harzdispersionen sowie durch Verwendung von Naturkautschuklatex und somit des Fehlens jeglichen mechanischen Kautschukabbaus ist eine Herstellung, Verarbeitung und Beschichtung von Klebemassen auf Basis von Naturkautschuklatex möglich und damit die Herstellung von Klebebändern, weil die Klebemasse eine sehr hohe Kohäsion und damit optimale Verpackungssicherheit aufweist.

Nicht nur für Verpackungsklebebänder zum Kartonverschluß, sondern auch für andere Verpackungsklebebänder, wie Strapptng-Tapes, ist daher eine ausreichende Kohäsion der Klebemasse auf Basis von Naturkautschuk notwendig.

Thermoplastfolien auf Basis von Polyvinylchlorid (PVC) werden zur Herstellung von Klebebändern von verschiedenen Herstellern eingesetzt. Hierbei zeichnen sich vor allem Folien auf Basis von PET durch eine hohe Reißdehnung und Wärmebeständigkeit von 130 °C bis 175 °C und Resistenz gegenüber verdünnten Laugen und Säuren aus. Weiterhin besitzen Folien auf Basis von Polyestem eine sehr hohe Abriebfestigkeit und Durchschlagfestigkeit, sind aber aufgrund des relativ hohen Preises gegenüber Folien auf Basis von Polyolefinen weniger verbreitet im Bereich der Verpackungsklebebänder.

Die Gewinnung des PVC kann hierbei durch Emulsions-, Suspensions- oder Massepolymerisation erfolgen. Auch Copolymere auf Basis PVC/Vinylacetat sind bekannt.

Folien auf Basis von PVC werden in Kombination mit lösemittelhaltigen Klebemassen auf Basis von Naturkautschuk als Verpackungsklebebänder angeboten. Hierbei werden aufgrund der besseren Wärmebeständigkeit Folien aus Hart-PVC verwendet, die bis max. 105 °C eine gute Wärmebeständigkeit aufweisen.

Folien auf Basis von geprägtem PVC werden ebenfalls in der Klebebandindustrie in Kombination mit lösemittelhaltigen Naturkautschukmassen eingesetzt. Hierdurch wird eine Reduzierung der Abrollkraft erreicht und damit eine bessere Verarbeitbarkeit.

Bei der Herstellung von Klebebändern mit Klebemassen auf Basis von Naturkautschuk werden hierbei sowohl wasserbasierte als auch lösemittelhaltige Primer als Haftvermittler zwischen Klebemasse und Trägerfolie eingesetzt. Diese eingesetzten Haftvermittler haben zum Teil eine auf die aus Lösung aufgetragene Klebemasse auf Basis von Naturkautschuk vernetzende Wirkung.
Weiterhin zeichnen sich die Folien auf Basis Hart-PVC durch mittlere Durchschlagskraft und eine teilweise. Resistenz gegenüber Benzin, Öl und Alkohole aus. Im allgemeinen ist die Verankerung von Primem auf PVC Folien ohne Coronabehandlung besser als bei anderen Thermoplastfolien, wie beispielsweise Folien auf Basis von Polyolefinen. Dies beruht auf der hohen Oberflächenenergie auch ohne Vorbehandlung [ca. 39 dyn/cm] und auf der rauen Oberflächenstruktur von PVC Folien. Für eine ausreichende Verankerung von Klebemassen auf Basis von Naturkautschuk ist eine mit Primer beschichtete PVC-Folie zu empfehlen.

Aufgabe der vorliegenden Erfindung ist es, Klebebänder mit Folien auf Basis von PVC und lösemittefrei hergestellten Klebemassen auf Basis von Naturkautschuklatex anzugeben, welche ein leises Abrollverhalten zeigen und somit als Verpackungsklebebänder für handelsübliche Kartonagen hervorragend geeignet sind.

Gelöst wird diese Aufgabe durch ein Klebeband, wie es im Hauptanspruch dargelegt ist. Gegenstand der Unteransprüche sind vorteilhafte Fortbildungen des Erfindungsgegenstands. Des weiteren betrifft die Erfindung Verwendungsvorschläge des erfindungsgemäßen Klebebands.

Demgemäß betrifft die Erfindung ein Klebeband mit einem Träger aus einer insbesondere gereckten Folie auf Basis von PVC und einer einseitig auf die Folie aufgetragenen Beschichtung aus einer Haftklebemasse auf Basis von Naturkautschuklatex und einer Harzdispersionen.
Die Klebemasse besteht aus einer Mischung enthaltend:

| | |
|---|---|
| 30 bis 65 Gew.-% | ein Naturkautschuklatex |
| 35 bis 70 Gew.-% | eine Harzdispersion auf Basis eines auf Aromaten modifizierten Kohlenwasserstoffharzes. |

Weich-PVC ist aufgrund der unzureichenden Wärmebeständigkeit von max. 60 °C nicht zur Herstellung von Verpackungsklebebändern eingeschränkt zu empfehlen, kann aber gegebenenfalls ebenso Verwendung finden.
Für die erfindungsgemäßen Klebebänder, um insbesondere einen sicheren Kartonverschluß zu gewährleisten, werden vorzugsweise Folien verwendet auf Basis von Hart-PVC.

Die Dicken der Folien liegen bevorzugt zwischen 20 und 100 µm, insbesondere zwischen 25 und 70 µm und ganz insbesondere zwischen 30 und 50 µm.

In einer weiteren bevorzugten Ausführungsform der Erfindung ist zwischen der gegebenenfalls flammen- oder coronabehandelten Folie und der Klebeschicht ein Haftvermittler vorhanden, der den guten Verbund der Klebemasse mit der Folie und die Vernetzung der Klebemasse garantiert.

Der Schichtauftrag der Klebeschicht beträgt insbesondere 10 bis 45 g/qm. In einer besonders bevorzugten Ausführung wird ein Schichtauftrag von 13 bis 28 g/qm eingestellt.

In einer besonders bevorzugten Variante enthalten die Klebemassen der erfindungsgemäßen Klebebänder 45 bis 60 Gew.-% Naturkautschuklatex. Weiterhin erfindungsgemäß sind andere Naturkautschuklatices sowie Mischungen verschiedener Typen von Naturkautschuklatices.

Je nach Anwendung können der Klebemasse zugesetzt werden und zwar unabhängig voneinandergewählt:
a) 0,1 bis 5 Gew.-% eines Alterungsschutzmittels,
b) 0,05 bis 5 Gew.-% eines Entschäumers,
c) 0,05 bis 4 Gew.-%, insbesondere 0,3 bis 3 Gew.-%, eines alkoxylierten Alkylphenols
d) 0,05 bis 20 Gew.-% mindestens eines Farbpigments

Weiter vorzugsweise enthält die Klebeschicht bis zu 20 Gew.-% mindestens eine Harzdispersion auf Basis von Kohlenwasserstoffharzen mit einem Erweichungspunkt von 20 °C bis 85 °C.
Die Klebemasse kann insbesondere 0,05 bis 20 Gew.-% und bevorzugt 2 bis 15 Gew.-% der zusätzlichen Harzdispersion enthalten.

Als Rohstoff für die erfindungsgemäßen Klebebänder wird bevorzugt Standard Naturkautschuklatex mit einem Ammoniakgehalt von 0,7 Gew.-% verwendet, zum einen da der erwähnte Naturkautschuklatex preisliche Vorteile bietet und zum zweiten da sein relativ hoher Ammoniakgehalt eine gute Stabilisierung des Naturkautschuklatex ermöglicht. Im wesentlichen eignet sich Naturkautschuklatex sehr gut für die Verwendung von Klebemassen für Klebebänder. Durch das sehr hohe Molekulargewicht, die Verschlaufungen der Molekülketten, niedriger Glasübergangstemperatur und der fehlenden Mastikation, bei der Herstellung der Klebemassen, des Naturkautschuklatex zeigen Klebemassen auf Basis von Naturkautschuklatex eine hervorragende Ausgewogenheit zwischen Adhäsion und Kohäsion.
Diese Eigenschaften sorgen für eine sehr hohe Verpackungssicherheit bei der Verwendung von Klebebändern mit einer Klebemasse auf Basis von Naturkautschuklatex, besonders bei Verwendung von kritischen Kartontypen und niedrigen Temperaturen.
Kntisch kann die mechanische Stabilität des Naturkautschuklatex in Bezug auf mechanische Scherbelastungen sein. Hierbei führen starke mechanische Scherbelastungen zur Koagulation des Naturkautschuklatex und somit zur fehlenden Verarbeitbarkeit. Möglichkeiten, die Klebemassen auf Basis von Naturkautschuklatex gegenüber mechanischen Belastungen zu stabilisieren, sind zum einen der Einsatz von stabilisierenden, geeigneten Harzdispersionen und zum anderen der Einsatz von Emulgatoren.

Die erfindungsgemäßen Klebebänder enthalten vorzugsweise Naturkautschuklatex zwischen 30 bis 65 Gew.-% des Standard Naturkautschuklatex mit einem hohem Ammoniakgehalt.

Wäßrige Harzdispersionen, d.h. Dispersionen von Harz in Wasser, sind bekannt. Herstellung und Eigenschaften sind beispielsweise beschrieben in "Resin Dispersions", Arme Z. Casey in Handbook of Pressure Sensitive Adhesive Technology, Second Edition, edited by Donatas Satas, Van Nostrand Reinhold New York, pp.545-566.
Harzdispersionen von Kohlenwasserstoffharzen sind ebenfalls bekannt und werden beispielsweise von der Firma Hercules BV unter dem Handelsnamen Tacolyn angeboten.

Für die erfindungsgemäßen Klebebänder werden Harzdispersionen auf Basis von - modifizierten Kohlenwasserstoffharzen als Hauptharzkomponente verwendet. Die Klebemasse enthält zwischen 35 bis 70 Gew.-% der Harzdispersion und bevorzugt zwischen 40 bis 55 Gew.-% der Harzdispersion. Der Feststoffgehalt der Harzdispersion liegt insbesondere zwischen 40 und 70 Gew.-%, bevorzugt zwischen 45 und 60 Gew.-%.

Erfindungsgemäß ist auch die Verwendung von Harzdispersion auf Basis von Mischungen verschiedener Kohlenwasserstoffharze sowie von Mischungen von erfindungsgemäßen Kohlenwasserstoffharzen mit anderen Harzen.

Ebenfalls bekannt sind Harzdispersionen auf Basis von modifizierten Kohlenwasserstoffen, und von besonderem Interesse sind hierbei C5/C9 Kohlenwasserstoff-Harzdispersionen, welche mit Aromaten modifiziert sind. Hierbei kann durch den Anteil des Aromatengehaltes die Polarität der Harzdispersion und damit der Klebemasse eingestellt werden. Neben der Polarität der Klebemasse wird die Härte des Harzes beeinflußt. Je geringer der Aromatengehalt ist, desto niedriger ist hierbei die Polarität der modifizierten Kohlenwasserstoffharzdispersion. Hierdurch kann direkt das Abrollverhalten des Klebebandes mit einem polaren Träger auf Basis von PVC eingestellt werden.
Durch einen sehr hohen Aromatengehalt der Harzdispersion und damit hoher Polarität der Klebemasse wird die Abrollkraft des Verpackungsklebebandes bei Verwendung eines PVC-Trägers stark erhöht. Dies führt zu einer eingeschränkten Einsetzbarkeit im Bereich der Verpackungsindustrie, denn durch den Einsatz von automatischen Verpackungsmaschinen wird eine niedrige bis mittlere Abrollkraft der auf PVC basierenden Verpackungsklebebänder gefordert (4-6 N/cm).

Daher basiert die Harzdispersion auf einem Aromaten modifizierten Kohlenwasserstoffharz mit einem Aromatengehalt von insbesondere 10 bis 45 % im Verhältnis zu den aliphatischen Bestandteilen.

Alterungsschutzmittel für Klebemassen auf Basis von Naturkautschuk sind bekannt Drei verschiedene Arten von Alterungsschutzmittel finden als Antioxidantien für Klebemassen besonders Verwendung. Alterungsschutzmittel auf Basis von Aminen, Dithiocarbamaten und auf Basis von Phenolen. Alterungsschutzmittel auf Basis von Phenolen sind sehr wirksam bei Einfluß von UV Strahlung und Sonnenlicht.

Für die erfindungsgemäßen Klebebänder werden Alterungsschutzmittel auf Basis von Phenolen eingesetzt Die Klebemasse enthält insbesondere 0,1 bis 5 Gew.-% eines Alterungsschutzmittels auf Basis von Phenolen. Erfindungsgemäß ist auch die Verwendung anderer Typen von Alterungsschutzmitteln, wie beispielsweise Alterungsschutzmittel auf Basis von Aminen und Dithiocarbamaten.

Anorganische und organische Pigmente für Klebmassen auf Basis von Naturkautschuk sind bekannt. Für die Anfärbung von Klebemassen auf Basis von Naturkautschuk wird insbesondere Titandioxid beziehungsweise Titandioxid in Kombination mit anders gefärbten Farbpigmenten eingesetzt.
Für die erfindungsgemäßen Klebebänder werden geeignete anorganische und/oder organische Farbpigmente in Dispersionsform eingesetzt. Die Klebemasse enthält vorzugsweise 0,05 bis 20 Gew.-% eines organischen beziehungsweise anorganischen Farbpigments. Weiterhin erfindungsgemäß ist die Verwendung von Pigmenten auf Basis von Mischungen verschiedener anorganischer und organischer Pigmente.

Die Verwendung von alkoxylierten Alkylphenolen als Weichmacher wird unter anderem vorgeschlagen in "Modification of Acrylic Dispersions", Alexander Zettl in Handbook of Pressure Sensitive Adhesive Technology, Second Edition, edited by Donatas Satas, Van Nostrand Reinhold New York, p.471. Die Eigenschaften der alkoxylierten Alkylphenole werden durch den Alkylrest und überwiegend durch den Aufbau der Polyglykoletherkette bestimmt. In einer bevorzugten Ausführung wird propoxyliertes Alkylphenol verwendet: Bevorzugt sind wasserlösliche alkoxylierte Alkylphenole.

Die Verwendung von Alkylphenolpolyglycolethern als Emulgatoren zur Stabilisierung der Naturkautschuklatex Dispersionsklebemasse wird unter anderem vorgeschlagen in "Compounding Natural Latex in water-based PSA's", Richard C. Oldack und Robert. E. Bloss in Adhesive Age, April 1979, pp 38-43.
Die Eigenschaften und die stabilisierende Wirkung der alkoxylierten Alkylphenole oder allgemein der Polyethylenoxyethanolat-Kondensate werden überwiegend durch die Polyglykoletherkette bestimmt. Hierbei ist ein Zusammenhang zwischen Länge der Polyglykoletherkette und der stabilisierenden Wirkung für Naturkautschuklatex gefunden worden.

Die erfindungsgemäßen Klebemassen können 0,05 bis 5 Gew.-% alkoxyliertes Alkylphenol, in einer bevorzugten Ausführung 1,0 bis 3 Gew.-%, enthalten.

Die Herstellung der erfindungsgemäßen Klebebänder kann nach den bekannten Verfahren erfolgen. Eine Übersicht über übliche Herstellungsverfahren findet sich beispielsweise in "Coating Equipment", Donatas Satas in Handbook of Pressure Sensitive Adhesive Technology, Second Edition edited by Donatas Satas, Van Nostrand New York, pp. 708-808. Die bekannten Verfahren zum Trocknen und Schneiden der Klebebänder sind ebenfalls im Handbook zu finden.

Die erfindungsgemäßen Klebebänder sind für eine große Anzahl von Klebebandanwendungen geeignet. Ein wichtiges Anwendungsfeld sind Verpackungsanwendungen. Die Klebebänder sind geeignet als Kartonverschlußbänder, allgemeine Verpackungsklebebänder, Strapping-Tapes, Klebebänder zum Verschließen von Kunststoffverpackungen und Kunststoffbeuteln. Die Klebebänder sind zur Palettensicherung geeignet. Weitere Anwendungen sind das Bündeln loser Güter und Transportgüter, wie beispielsweise Rohren, Holzleisten u.a.. Die erfindungsgemäßen Klebbänder können zur Transportsicherung von beispielsweise Kühlschränken und anderen elektrischen und elektronischen Geräten verwendet werden. Weitere Anwendungen sind Etikettenschutz, Oberflächenschutz, beispielsweise im Baubereich und Aufreißstreifen für Verpackungen. Ebenso sind Anwendungen im Bürobereich möglich.
Die Verpackungsklebebänder weisen insbesondere Lauflängen auf von 66, 100 und 1000 m. Als Breite der Rollen werden üblicherweise 18, 24, 36, 48, 50 und 72 mm gewählt.
Die bevorzugten Farben sind braun, weiß und transparent. Die Bedruckung erfolgt auf Rollen von 144 oder 150 mm Breite, die anschließend wieder auf die oben genannten Breiten geschnitten werden.

Weiterhin sind Klebebänder mit einer Folie auf Basis von Polyvinylchlorid und einer einseitig auf die Folie aufgetragenen Klebeschicht, hergestellt aus einer Mischung enthaltend 30 bis 65 Gew.-% ein Naturkautschuklatex und 35 bis 70 Gew.-% eine Harzdispersion auf Basis eines Kohlenwasserstoffharzes, für die genannten Anwendungen geeignet wie zum Beispiel Verpackungsanwendungen. Die Klebebänder sowie entsprechende vorteilhafte Ausführungsformen dienen ebenfalls als Kartonverschlußbänder, allgemeine Verpackungsklebebänder, Strapping-Tapes, Klebebänder zum Verschließen von Kunststoffverpackungen und Kunststoffbeuteln. Die Klebebänder sind zur Palettensicherung geeignet.

Die vorteilhaften Ausführungsformen entsprechen denjenigen des erfindungsgemäßen Klebebands mit der Aromaten modifizierten Klebemasse, allerdings weist die Klebemasse hier nicht die genannte Modifikation auf.

Im folgenden soll die Erfindung anhand von Beispielen erläutert werden, ohne die Erfindung unnötig einschränken zu wollen.

### Beispiele

### Beispiel 1

### Beispiel a1: Folie

Es wird eine Folie auf Basis von PVC verwendet

| | |
|---|---|
| Foliendicke | 38 µm |
| Kennzeichnung | AD-R240/01Fb130000 |
| Firma/Hersteller | Kalle Pentaplast |

### Beispiel b: Komponenten

Eingesetzte Komponenten:

| | |
|---|---|
| b1 | der Klebemasse |
| b1.1 | Naturkautschuklatex beziehbar über die Fa. Weber&Schaer, Hamburg; (Feststoffgehalt 60 %) |
| b1.2.1. | Wäßrige Harzdispersion auf Basis von Kohlenwasserstoffharzen (Fa. Hercules BV, Tacolyn 1070, Feststoffgehalt 55 Gew.-%; Erweichungspunkt 70 °C mit Aromatenanteil von 30 %) |
| b1.3. | Alterungsschutzmittel AD112 der Fa. Synthomer GmbH, Frankfurt |
| b1.4 | Entschäumer Foamaster 306 der Fa. Henkel, Düsseldorf |

| | |
|---|---|
| b2 | des Primers |
| b2.1 | Trapylen 6965W (Niedrig chloriertes Polypropylendispersion der Fa. Tramaco, Hamburg) |
| b2.2. | Butofan LS103 /Styrol Butadien Latex der Fa. BASF |

### Beispiel c: Rezepturen

### c1 Rezeptur A der Klebemasse

Die Rezeptur ist in Gew.-% angegeben:

| | |
|---|---|
| Naturkautschuklatex Dispersion | 52 Gew.-% |
| Tacolyn 1070 | 47 Gew.-% |
| Alterungsschutzmittel | 0,7 Gew.-% |
| Entschäumer | 0,3 Gew.-% |

### c2 Rezeptur B des Primers

Die Rezeptur ist in Gew.-% angegeben:

| | |
|---|---|
| Trapylen 6965W | 50 Gew.-% |
| Butofan LS103 | 50 Gew.-% |

### Beispiel d: Herstellung der Klebemasse und des Primers

Die Herstellung der zu beschichtenden Klebemasse A wird wie folgt durchgeführt:

| | |
|---|---|
| d1 | In die Naturkautschuklatex wird bei 23 °C die Harzdispersion unter ständigem Rühren mit einem üblichen mechanischen Rührer zugegeben. Danach wird 15 min weiter vorsichtig gerührt. |
| d2 | In die Mischung von Schritt 1 (d1) wird vorsichtig das Alterungsschutzmittel und der Entschäumer eingerührt Danach wir 15 min weitergerührt Danach erfolgt die Beschichtung. |

Die Herstellung des Primers mit Rezeptur B wird wie folgt durchgeführt:

| | |
|---|---|
| d3 | Trapylen 6965W und Butofan LS103 werden ohne weitere Vorbehandlung vermischt und eingesetzt. |

### Beispiel e: Beschichtung

Die Beschichtung der Folie a mit der Primer Rezeptur B und der Klebemasse Rezeptur A erfolgt durch einen Drahtrakel. Hierbei wird in einem ersten Schritt der Primer aufgetragen, kurz getrocknet bei 80 bis 90 °C und direkt danach in einem zweiten Schritt (in-line oder off-line) die Klebemasse auf die Primerschicht aufgetragen.

Das Drahtrakel und die Beschichtungsgeschwindigkeit werden so eingestellt, daß nach der Trocknung der beschichteten Folie ein Masseauftrag von ca. 18 g/qm gemessen wird und eine Primerauftrag von 0,6 bis 0,8 g/qm gemessen wird. Die Beschichtung erfolgte auf einer Technikumsstreichanlage mit einer Arbeitsbreite von 500 mm und einer Beschichtungsgeschwindigkeit von 10 m/min. Hinter der Beschichtungsstation mit Drahtrakelauftragswerk befindet sich ein Trockenkanal, der mit heißer Luft (ca. 70 °C) betrieben wird. Die beschichtete Folie wurde in einer Breite von 50 mm und 60 m Länge konfektioniert.
Die Bestimmung der klebetechnischen Daten erfolgte nach zweitägiger Lagerung bei 23 °C und nach ein- bis dreimonatiger Lagerung bei 23 °C.

### Beispiel f: Ergebnisse

Die eingesetzten Prüfmethoden sind im folgenden kurz charakterisiert:

Zur Bestimmung des Masseauftrags wird aus der beschichteten Folie ein kreisrundes Muster mit bekanntem Flächeninhalt ausgeschnitten und gewogen. Danach wird die Klebemasse durch Ablösen mit Benzin entfernt und die nun klebemassefreie Folie emeut gewogen. Aus der Differenz wird der Masseauftrag in g/m² berechnet.

Zur Charakterisierung des Anfaßvermögens zu Karton wird das Klebeband mit einem handelsüblichen Handabroller auf den Karton aufgebracht und mittels einer 2 kg schweren Stahlrolle angedrückt (zweimaliges Überrollen). Nach einer Wartezeit von 3 min wird das Klebeband mit einer Geschwindigkeit von ca. 30m/min unter einem Winkel von ca. 130° zur Kartonoberfäche parallel abgezogen. Die Beurteilung des Anfaßvermögens zu Karton erfolgt qualitativ anhand der Menge an ausgerissenen Papierfasem im Vergleich zu einem handelsüblichen Verpackungsklebeband wie tesapack 4124 der Fa. Beiersdorf, dessen Anfaßvermögen sehr gut charakterisiert wird.

Zur Bestimmung der Verpackungssicherheit wird ein Standardkarton (Versandkarton; 425 mm x 325 mm x 165 mm: Länge x Breite x Höhe: Fa. Europakarton; aufgebaut aus zweiwelliger Wellpappe mit 125 g/qm Außenlage aus Kraftliner) mit dem Klebeband mittels eines handelsüblichen Verpackungsautomaten (Fa. Knecht, Modell 6030 und Verschlußaggregat 6230, Einstellung ohne Bremsweg) verschlossen. Das Klebeband wird mittig im üblichen U-Verschluß aufgebracht, so daß an den Stirnseiten jeweils 60 mm Klebeband verklebt sind. Der Karton wird vor dem Verschließen vollständig mit Erbsen gefüllt und auf der Seitenfläche liegend bei 40 °C und bei 23 °C gelagert. Die Verpackungssicherheit wird sehr gut charakterisiert, wenn der Karton länger als 30 Tage verschlossen bleibt. Weiterhin wird das Rutschen des Klebebandes am Karton beziehungsweise das Verhalten des Klebebandes an den verklebten Stellen charakterisiert und beschrieben und mit dem Referenzklebeband verglichen (Tabelle 1 und folgende).

Die Bestimmung des Abrollgeräusches erfolgt beim Abrollen des Klebebandes mit einer Abrollgeschwindigkeit von 45 m/min. Gemessen wird Abrollgeräusch in dB (A) im Abstand von 25 cm vom Zentrum der Klebebandrolle mit einem handelsüblichen Lautstärkemeßgerät der Firma Brüel&Kjear (Type 2226). Eine gemessene Lautstärke kleiner als 83 dB (A) wird als leise eingestuft.

Die Messung der Abrollkraft erfolgt bei konstanter Abrollgeschwindigkeit (30 m/min) durch Messung des Drehmoments und Berechnung der Abrollkraft nach den bekannten Formeln in N/cm.

Die Ergebnisse der Untersuchung eines erfindungsgemäßen Klebebands mit Folie und die Einschätzung zu Vergleichsklebebändern sind in Tabelle 1 wiedergegeben.

**Tabelle 1:**

| Verhalten der erfindungsgemäßen Klebebänder | | |
|---|---|---|
| Aufbau/Lagerzeit/Temperatur | Muster A mit einfacher Folie | Muster T1 |
| | | Tesa 4124 |
| Klebemasse | Klebemasse A | Naturkautschuk Lösemittel Klebemasse |
| Träger | Folie a1 | Folie a1 |
| Primer | Rezeptur B | |
| Klebemasseauftrag [g/m²] | 23 | 24 |
| Auftrag Primerschicht [g/m²] | 0,8 | |
| Masseverankerung | Gut | Gut |
| Abrollverhalten [laut/leise] | leise | leise |
| Verpackungssicherheit | Sehr gut | Sehr gut |
| Anfaßverhalten zu Karton | Gut | Sehr gut |
| Muster A: Muster der erfindungsgemäßen Klebebänder | | |

### Beispiel 2

### Beispiel a: Folie

Es wird eine Folie auf Basis von PVC verwendet.

| | |
|---|---|
| Foliendicke | 38 µm |
| Kennzeichnung | AD-R240/01Fb130000 |
| Firma/Hersteller | Kalle Pentaplast |

### Beispiel b1: Komponenten

Eingesetzte Komponenten:

| | |
|---|---|
| b1 | der Klebemasse |
| b1.1 | Naturkautschuklatex beziehbar über die Fa. Weber&Schaer, Hamburg; (Feststoffgehalt 60 %) |
| b1.2.1 | Wäßrige Harzdispersion auf Basis von Kohlenwasserstoffharzen (Fa. Hercules BV, Tacolyn 1070, Feststoffgehalt 55 Gew.-%; Erweichungspunkt 70 °C mit einem Aromatenanteil von 50 %) |
| b1.3. | Alterungsschutzmittel AD112 der Fa Synthomer GmbH, Frankfurt |
| b1.4 | Entschäumer Foamaster 306 der Fa. Henkel, Düsseldorf |

| | |
|---|---|
| b2 | des Primers |
| b2.1 | Trapylen 6965W (Niedrig chloriertes Polypropylendispersion der Fa. Tramaco, Hamburg) |
| b2.2. | Butofan LS103 /Styrol Butadien Latex der Fa. BASF |

### Beispiel c: Rezepturen

### c1 Rezeptur A der Klebemasse

Die Rezeptur ist in Gew.-% angegeben:

| | |
|---|---|
| Naturkautschuklatex Dispersion | 52 Gew.-% |
| Tacolyn 1070 | 47 Gew.-% |
| Alterungsschutzmittel | 0,7 Gew.-% |
| Entschäumer | 0,3 Gew.-% |

### c2 Rezeptur B des Primers

Die Rezeptur ist in Gew.-% angegeben:

| | |
|---|---|
| Trapylen 6965W | 50 Gew.-% |
| Butofan LS103 | 50 Gew.-% |

### Beispiel d: Herstellung der Klebemasse und des Primers

Die Herstellung der zu beschichtenden Klebemasse A wird wie folgt durchgeführt:

| | |
|---|---|
| d1 | In die Naturkautschuklatex wird bei 23 °C die Harzdispersion unter ständigem Rühren mit einem üblichen mechanischen Rührer zugegeben. Danach wird 15 min weiter vorsichtig gerührt. |
| d2 | In die Mischung von Schritt 1 (d1) wird vorsichtig das Alterungsschutzmittel und der Entschäumer eingerührt. Danach wir 15 min weitergerührt. Danach erfolgt die Beschichtung. |

Die Herstellung des Primers mit Rezeptur B wird wie folgt durchgeführt:

| | |
|---|---|
| d3 | Trapylen 6965W und Butofan LS103 werden ohne weitere Vorbehandlung vermischt und eingesetzt. |

### Beispiel e: Beschichtung

Die Beschichtung der Folie a mit der Primer Rezeptur B und der Klebemasse Rezeptur A erfolgt durch einen Drahtrakel. Hierbei wird in einem ersten Schritt der Primer aufgetragen; kurz getrocknet bei 80 bis 90 °C und direkt danach in einem zweiten Schritt (in-line oder off-line) die Klebemasse auf die Primerschicht aufgetragen.

Das Drahtrakel und die Beschichtungsgeschwindigkeit werden so eingestellt, daß nach der Trocknung der beschichteten Folie ein Masseauftrag von ca. 18 g/qm gemessen wird und eine Primerauftrag von 0,6 bis 0,8 g/qm gemessen wird. Die Beschichtung erfolgte auf einer Technikumsstreichanlage mit einer Arbeitsbreite von 500 mm und einer Beschichtungsgeschwindigkeit von 10 m/min. Hinter der Beschichtungsstation mit Drahtrakelauftragswerk befindet sich ein Trockenkanal, der mit heißer Luft (ca. 70 °C) betrieben wird. Die beschichtete Folie wurde in einer Breite von 50 mm und 60 m Länge konfektioniert.

Die Bestimmung der klebetechnischen Daten erfolgte nach zweitägiger Lagerung bei 23 °C und nach ein- bis dreimonatiger Lagerung bei 23 °C.

### Beispiel f: Ergebnisse

Die Ergebnisse der Untersuchung eines erfindungsgemäßen Klebebands mit Klebemasse, die mit Aromaten modifizierte Kohlenwasserstoffharze enthält, und die Einschätzung zu Vergleichsklebebändem sind in Tabelle 2 wiedergegeben.

**Tabelle 2:**

| Verhalten der erfindungsgemäßen Klebebänder | | |
|---|---|---|
| Aufbau/Lagerzeit/Temperatur | Muster B | tesa Pack 4124 |
| Technologie | NR-Latex | NR Lösemittel |
| Träger | Folie a | Folie a |
| Primer | Rezeptur B | |
| Klebemasse | Rezeptur A | |
| Aromatenanteil des eingesetzten Harzes [Gew.-%] | 30 | |
| Klebemasseauftrag [g/m²] | 24 | 24 |
| Auftrag Primerschicht [g/m²] | 0,8 | 0,8 |
| Masseverankerung | Gut | Sehr gut |
| Abrollverhalten [laut/leise] | leise | leise |
| Abrollkraft bei 30 m/min [N/cm] | 4,9 | 5,2 |
| Verpackungssicherheit | Sehr gut | Sehr gut |
| Muster B: Muster der erfindungsgemäßen Klebebänder | | |

### Beispiel 3

### Beispiel a: Folie

Es wird eine Folie auf Basis von PVC verwendet

| | |
|---|---|
| Foliendicke | 38 µm |
| Kennzeichnung | AD-R240/01Fb130000 |
| Firma/Hersteller | Kalle Pentaplast |

### Beispiel b2: Komponenten

Eingesetzte Komponenten:

| | |
|---|---|
| b1 | der Klebemasse |
| b1.1 | Naturkautschuklatex beziehbar über die Fa Weber&Schaer, Hamburg; (Feststoffgehalt 60 %) |
| b1.2.2 | Wäßrige Harzdispersion auf Basis von Aromaten modifizierten Kohlenwasserstoffharzen (Fa. Hercules BV, MBG193, Feststoffgehalt 50 Gew.-%; Erweichungspunkt 85 °C mit einem Aromatenanteil von 50 %) |
| b1.3. | Alterungsschutzmittel AD112 der Fa. Synthomer GmbH, Frankfurt |
| b1.4 | Entschäumer Foamaster 306 der Fa. Henkel, Düsseldorf |

| | |
|---|---|
| b2 | des Primers |
| b2.1 | Trapylen 6965W (Niedrig chloriertes Polypropylendispersion der Fa. Tramaco, Hamburg) |
| b2.2. | Butofan LS103 /Styrol Butadien Latex der Fa. BASF |

### Beispiel c: Rezepturen

### c1 Rezeptur A der Klebemasse

Die Rezeptur ist in Gew.-% angegeben:

| | |
|---|---|
| Naturkautschuklatex Dispersion | 52 Gew.-% |
| MBG193 | 47 Gew.-% |
| Alterungsschutzmittel | 0,7 Gew.-% |
| Entschäumer | 0,3 Gew.-% |

### c2 Rezeptur B des Primers

Die Rezeptur ist in Gew.-% angegeben:

| | |
|---|---|
| Trapylen 6965W | 50 Gew.-% |
| Butofan LS103 | 50 Gew.-% |

### Beispiel d: Herstellung der Klebemasse und des Primers

Die Herstellung der zu beschichtenden Klebemasse A wird wie folgt durchgeführt:

| | |
|---|---|
| d1 | In die Naturkautschuklatex wird bei 23 °C die Harzdispersion unter ständigem Rühren mit einem üblichen mechanischen Rührer zugegeben. Danach wird 15 min weiter vorsichtig gerührt |
| d2 | In die Mischung von Schritt 1 (d1) wird vorsichtig das Alterungsschutzmittel und der Entschäumer eingerührt. Danach wir 15 min weitergerührt. Danach erfolgt die Beschichtung. |

Die Herstellung des Primers mit Rezeptur B wird wie folgt durchgeführt

| | |
|---|---|
| d3 | Trapylen 6965W und Butofan LS103 werden ohne weitere Vorbehandlung vermischt und eingesetzt. |

### Beispiel e: Beschichtung

Die Beschichtung der Folie a mit der Primer Rezeptur B und der Klebemasse Rezeptur A erfolgt durch einen Drahtrakel. Hierbei wird in einem ersten Schritt der Primer aufgetragen, kurz getrocknet bei 80 bis 90 °C und direkt danach in einem zweiten Schritt (in-line oder off-line) die Klebemasse auf die Primerschicht aufgetragen.

Das Drahtrakel und die Beschichtungsgeschwirtdigkeit werden so eingestellt, daß nach der Trocknung der beschichteten Folie ein Masseauftrag von ca 18 g/qm gemessen wird und eine Primerauftrag von 0,6 bis 0,8 g/qm gemessen wird. Die Beschichtung erfolgte auf einer Technikumsstreichanlage mit einer Arbeitsbreite von 500 mm und einer Beschichtungsgeschwindigkeit von 10 m/min. Hinter der Beschichtungsstation mit Drahtrakelauftragswerk befindet sich ein Trockenkanal, der mit heißer Luft (ca. 70 °C) betrieben wird. Die beschichtete Folie wurde in einer Breite von 50 mm und 60 m Länge konfektioniert.
Die Bestimmung der klebetechnischen Daten erfolgte. nach zweitägiger Lagerung bei 23 °C und nach ein- bis dreimonatiger Lagerung bei 23 °C.

### Beispiel f: Ergebnisse

Die Ergebnisse der Untersuchung eines erfindungsgemäßen Klebebands mit Klebemasse, die mit Aromaten modifizierte Kohlenwasserstoffharze enthält, und die Einschätzung zu Vergleichsklebebändem sind in Tabelle 3 wiedergegeben.

**Tabelle 3:**

| Verhalten der erfindungsgemäßen Klebebänder | | |
|---|---|---|
| Aufbau/Lagerzeit/Temperatur | Muster C | tesa Pack 4124 |
| Technologie | NR-Latex | NR Lösemittel |
| Träger | Folie a | Folie a |
| Primer | Rezeptur B | |
| Klebemasse | Rezeptur A | |
| Aromatenanteil des eingesetzten Harzes | 45 % | |
| Klebemasseauftrag [g/m²] | 24 | 24 |
| Auftrag Primerschicht [g/m²] | 0,8 | 0,8 |
| Masseverankerung | Sehr gut | Sehr gut |
| Abrollverhalten [laut/leise] | laut | leise |
| Abrollkraft bei 30 m/min [N/cm] | 7,8 | 5,2 |
| Verpackungssicherheit | Sehr gut | Sehr gut |
| Muster C: Muster der erfindungsgemäßen Klebebänder | | |

## Patentansprüche

1. Klebeband, mit
a. einer Folie auf Basis von Polyvinylchlorid und
b. einer einseitig auf die Folie aufgetragenen Klebeschicht, hergestellt aus einer Mischung enthaltend
| | |
|---|---|
| 30 bis 65 Gew.-% | ein Naturkautschuklatex |
| 35 bis 70 Gew.-% | eine Harzdispersion auf Basis eines auf Aromaten modifizierten Kohlenwasserstoffharzes. |

2. Klebeband nach Anspruch 1, **dadurch gekennzeichnet, daß** die Folie aus Hart-Polyvinylchlorid besteht und/oder eine Foliendicke zwischen 25 und 70 µm aufweist.

3. Klebeband nach Anspruch 1 und 2, daß zwischen der Thermoplastfolie und der Klebeschicht eine Schicht aus einem Primer aufgebracht ist.

4. Klebeband nach zumindest einem der vorhergehenden Ansprüche, **dadurch gekennzeichnet, daß** der Schichtauftrag der Klebeschicht auf die Folie 10 bis 45 g/qm beträgt.

5. Klebeband nach zumindest einem der vorhergehenden Ansprüche, **dadurch gekennzeichnet, daß** die Klebeschicht bis zu 20 Gew.-% mindestens eine Harzdispersion auf Basis von Kohlenwasserstoffharzen mit einem Erweichungspunkt von 20 °C bis 85 °C enthält.

6. Klebeband nach zumindest einem der vorhergehenden Ansprüche, **dadurch gekennzeichnet, daß** die Harzdispersion basiert auf einem Aromaten modifizierten Kohlenwasserstoffharz mit einem Aromatengehalt von 10 bis 45 %.

7. Klebeband nach zumindest einem der vorhergehenden Ansprüche, **dadurch gekennzeichnet, daß** die Klebeschicht enthält zu
| | |
|---|---|
| 0,1 bis 5 Gew.-% | ein Alterungsschutzmittel, |
| 0,05 bis 4 Gew.-%, | insbesondere 0,3 bis 3 Gew.-%, ein alkoxyliertes Alkylphenol, |
| 0,05 bis 5 Gew.-% | ein Entschäumer und/oder |
| 0,05 bis 20 Gew.-% | zumindest ein Farbpigment. |

8. Verwendung des Klebebandes nach einem der Ansprüche 1 bis 7 als Verpackungsklebeband, mit gutem Anfaßvermögen zu Papier, insbesondere recyceltem Papier, ausreichender Kohäsion, guter Verpackungssicherheit, guter Masseverankerung und leichtem Abrollen.

9. Verwendung eines Klebebandes mit
a. einer Folie auf Basis von Polyvinylchlorid und
b. einer einseitig auf die Folie aufgetragenen Klebeschicht, hergestellt aus einer Mischung enthaltend
| | |
|---|---|
| 30 bis 65 Gew.-% | ein Naturkautschuklatex |
| 35 bis 70 Gew.-% | eine Harzdispersion auf Basis eines Kohlenwasserstoffharzes, |
als Verpackungsklebeband mit gutem Anfaßvermögen zu Papier, insbesondere recyceltem Papier, ausreichender Kohäsion, guter Verpackungssicherheit, guter Masseverankerung und leichtem Abrollen.

## Revendications

1. Bande adhésive avec
a. une feuille à base de chlorure de polyvinyle et
b. une couche adhésive appliquée sur une face sur la feuille, fabriquée à partir d'un mélange contenant
de 30 à 65% en poids d'un latex de caoutchouc naturel
de 35 à 70% en poids d'une dispersion de résine à base d'une résine d'hydrocarbure, modifiée avec des composés aromatiques.

2. Bande adhésive selon la revendication 1, **caractérisée en ce que** la feuille se compose de chlorure de polyvinyle dur et/ou présente une épaisseur de feuille comprise entre 25 et 70 µm.

3. Bande adhésive selon la revendication 1 et 2, **caractérisée en ce qu'**une couche faite d'un apprêt est appliquée entre la feuille thermoplastique et la couche adhésive.

4. Bande adhésive selon au moins l'une quelconque des revendications précédentes, **caractérisée en ce que** le grammage de la couche adhésive sur la feuille est de 10 à 45 g/m².

5. Bande adhésive selon au moins l'une quelconque des revendications précédentes, **caractérisée en ce que** la couche adhésive contient jusqu'à 20% en poids d'au moins une dispersion de résine à base de résines d'hydrocarbures ayant un point de ramollissement de 20°C à 85°C.

6. Bande adhésive selon au moins l'une quelconque des revendications précédentes, **caractérisée en ce que** la dispersion de résine se base sur une résine d'hydrocarbure modifiée avec des composés aromatiques, ayant une teneur en composés aromatiques de 10 à 45%.

7. Bande adhésive selon au moins l'une quelconque des revendications précédentes, **caractérisée en ce que** la couche adhésive contient
de 0,1 à 5% en poids d'un agent de protection contre le vieillissement
de 0,05 à 4% en poids, en particulier, de 0,3 à 3% en poids d'un alkylphénol alcoxylé,
de 0,05 à 5% en poids d'un agent antimousse et/ou
de 0,05 à 20% en poids d'au moins un pigment coloré.

8. Utilisation. de la bande adhésive selon l'une quelconque des revendications 1 à 7, en tant que bande adhésive d'emballage, ayant un bon pouvoir de prise vis-à-vis du papier, en particulier vis-à-vis du papier recyclé, une cohésion suffisante, une bonne sécurité d'emballage, un bon ancrage de la masse et un déroulement facile.

9. Utilisation d'une bande adhésive avec
a. une feuille à base de chlorure de polyvinyle et
b. une couche adhésive appliquée sur une face sur la feuille, fabriquée à partir d'un mélange contenant
de 30 à 65% en poids d'un latex de caoutchouc naturel
de 35 à 70% en poids d'une dispersion de résine à base d'une résine d'hydrocarbure,
en tant que bande adhésive d'emballage, ayant un bon pouvoir de prise vis-à-vis du papier, en particulier vis-à-vis du papier recyclé, une cohésion suffisante, une bonne sécurité d'emballage, un bon ancrage de la masse et un déroulement facile.

## Claims

1. Adhesive tape comprising
a. a film based on polyvinyl chloride and
b. an adhesive layer applied to one side of the film, prepared from a mixture comprising
| | |
|---|---|
| from 30 to 65% by weight | of a natural rubber latex |
| from 35 to 70% by weight | of a resin dispersion based on a hydrocarbon resin modified on aromatics. |

2. Tape according to Claim 1, **characterized in that** the film is composed of unplasticized polyvinyl chloride and/or has a thickness of between 25 and 70 µm.

3. Tape according to Claim 1 and 2, that a layer of a primer has been applied between the thermoplastic film and the adhesive layer.

4. Tape according to at least one of the preceding claims, **characterized in that** the application rate of the adhesive layer to the film is from 10 to 45 g/m².

5. Tape according to at least one of the preceding claims, **characterized in that** the adhesive layer contains up to 20% by weight of at least one resin dispersion based on hydrocarbon resins having a softening point of from 20°C to 85°C.

6. Tape according to at least one of the preceding claims, **characterized in that** the resin dispersion is based on an aromatics-modified hydrocarbon resin having an aromatics content of from 10 to 45%.

7. Tape according to at least one of the preceding claims, **characterized in that** the adhesive layer contains
| | |
|---|---|
| from 0.1 to 5% by weight | of an aging inhibitor, |
| from 0.05 to 4% by weight, in particular from 0.3 to 3% by weight, | of an alkoxylated alkylphenol, |
| from 0.05 to 5% by weight | of a defoamer and/or |
| from 0.05 to 20% by weight | of at least one colour pigment. |

8. Use of the tape according to any of Claims 1 to 7 as an adhesive packaging tape possessing good tack with respect to paper, especially recycled paper, adequate cohesion, good packaging security, good anchoring of the adhesive, and easy unwind.

9. Use of an adhesive tape comprising
a. a film based on polyvinyl chloride and
b. an adhesive layer applied to one side of the film, prepared from a mixture comprising
| | |
|---|---|
| from 30 to 65% by weight | of a natural rubber latex |
| from 35 to 70% by weight | of a resin dispersion based on a hydrocarbon resin, |
as an adhesive packaging tape possessing good tack with respect to paper, especially recycled paper, adequate cohesion, good packaging security, good anchoring of the adhesive, and easy unwind.
